# EUROPÄISCHE PATENTANMELDUNG

(11) **EP 4 521 661 A1**
(43) Veröffentlichungstag der Anmeldung: **12.03.2025**
(21) Anmeldenummer: 24199388.0
(22) Anmeldetag: 10.09.2024
(51) Int. Cl.: H04H 60/33, H04N 21/422, H04N 21/442

(54) **VORRICHTUNG UND VERFAHREN ZUM ERFASSEN DER AUFMERKSAMKEIT EINES ZUSCHAUERS**

(30) Priorität: 11.09.2023 DE 102023124470
(71) Anmelder: fm marketing gmbh, 5202 Neumarkt am Wallersee (AT)
(72) Erfinder: Maier, Ferdinand, 5202 Neumarkt am Wallersee (AT); Langdon, Chris, Burnaby, BC, V5E4E7 (CA)
(74) Vertreter: von Bülow & Tamada

(57) **Zusammenfassung**

Die Erfindung betrifft eine Vorrichtung zum Erfassen der Aufmerksamkeit eines Zuschauers einer auf einem Bildschirm abgespielten multimedialen Medienwiedergabe mit einer Fernbedienung, wenn auf dem Bildschirm eine Aufforderung an den Zuschauer, eine CTA-Taste genannte Call-To-Action-Taste der Fernbedienung zu betätigen, dargestellt wird, umfassend eine Uhr zum Erstellen eines Berührungszeitestempels, wenn der Zuschauer auf der Fernbedienung die CTA-Taste berührt, zum Erstellen eines Lösezeitestempels, wenn der Zuschauer die Berührung der CTA-Taste auf der Fernbedienung beendet, und zum Erstellen eines Auslösezeitestempels, wenn der Zuschauer die CTA-Taste auf der Fernbedienung betätigt.

## Beschreibung

Die vorliegende Erfindung betrifft eine Vorrichtung zum Erfassen der Aufmerksamkeit eines Zuschauers, eine Fernbedienung zur Verbindung mit der Vorrichtung und ein System mit der Vorrichtung und der Fernbedienung.

Die US2015100167AA offenbart ein Smart-Home-System mit einer Fernbedienung, auf der Lens-Buttons genannte spezielle Tasten mit einer transparenten Oberfläche angeordnet sind. Sie können neben der Eingabe von Befehlen auch als visuelle Indikatoren dienen. Ein hinter den Buttons eingebauter Lichtring kann den Zustand von Smart-Geräten anzeigen. Das Smart-Home-System umfasst ferner einen Gefahrenmelder mit sieben verschiedenen Sensoren, darunter Rauch-, Hitze- und Kohlenmonoxidsensoren zur Auslösung von Alarmsignalen und Ausgabe von Sprachmeldungen mit Handlungsaufforderungen (Call-to-Action), um einen Benutzer darüber zu informieren, welche Art von Gefahr (z.B. Rauch oder Kohlenmonoxid) erkannt wurde und wo diese Gefahr lokalisiert ist (z.B. im Wohnzimmer oder Schlafzimmer). Die Handlungsaufforderungen enthalten spezifische Anweisungen für das weitere Vorgehen, wie zum Beispiel "Verlassen Sie jetzt den Raum" oder "Gehen Sie an die frische Luft".

US 2018 / 0 098 109 A1 offenbart ein System, bei dem eine Fernbedienung mit Touchscreen zur Steuerung eines Bildanzeigegeräts verwendet wird. Die Fernbedienung zeigt verschiedene Geräteeinstellungen und Funktionen an, ermöglicht eine präzise Mikrosteuerung und reduziert die Anzahl physischer Tasten im Vergleich zu herkömmlichen Fernbedienungen. Die Interaktionen zwischen der Fernbedienung und dem Bildanzeigegerät erfolgen lokal, wobei die Fernbedienung in der Lage ist, komplexe Benutzerbefehle zu empfangen und entsprechende Funktionen auf dem Bildanzeigegerät auszuführen. Die Erfassung der Dauer einer Tastenbetätigung ermöglicht es der Fernbedienung, zwischen verschiedenen Arten von Eingaben (z.B. kurzer vs. langer Tastendruck) zu unterscheiden und entsprechend unterschiedliche Funktionen auszulösen.

Die US 2015 / 0 121 412 A1 offenbart ein System zur Steuerung von Benachrichtigungen auf internetfähigen Fernsehgeräten und anderen verbundenen Multimedia-Geräten, um die Zuschauererfahrung zu verbessern. Das System ermöglicht es dem Benutzer, unerwünschte Benachrichtigungen, die während des Fernsehens stören könnten, zu unterdrücken oder zu steuern. Dies wird durch verschiedene Methoden wie langes Drücken von Tasten auf der Fernbedienung, Doppelklick auf die Mute-Taste oder die Verwendung einer speziellen Benachrichtigungs-Stummschalttaste erreicht. Der Zweck der Steuerung und Unterdrückung von Benachrichtigungen besteht darin, die Immersion des Zuschauers in die Fernsehinhalte zu bewahren und Ablenkungen zu minimieren. Zeitstempel können erfasst werden, um lange Tastendrücke zu erkennen und so die Benachrichtigungen für eine bestimmte Zeit oder bis zur erneuten Betätigung der Taste zu unterdrücken.

Die Veröffentlichung MDN Web Docs - Performance API - PerformancePaintTiming vom 07.07.2023 abrufbar unter der URL https://developer.mozilla.org/en-US/docs/Web/API/PerformancePaintTim ing offenbart die PerformancePaintTiming API, die Zeitstempel für das Rendern von Inhalten auf einer Webseite erfasst. Insbesondere erfasst sie den Zeitpunkt des ersten Renders (first paint) und den Zeitpunkt des ersten Renderns von textuellen oder bildlichen Inhalten (first contentful paint). Diese Informationen werden verwendet, um die Reaktionsfähigkeit und Leistung einer Webseite zu verbessern, indem die Zeit, bis Benutzer Inhalte sehen können, minimiert wird.

Die Aufgabe der Erfindung ist es, das bekannte System zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst eine Vorrichtung zum Erfassen der Aufmerksamkeit eines Zuschauers einer auf einem Bildschirm abgespielten multimedialen Medienwiedergabe mit einer Fernbedienung, wenn auf dem Bildschirm eine Aufforderung an den Zuschauer, eine CTA-Taste genannte Call-To-Action-Taste der Fernbedienung zu betätigen, dargestellt wird. Diese Vorrichtung umfasst eine Uhr zum Erstellen eines Berührungszeitestempels, wenn der Zuschauer auf der Fernbedienung die CTA-Taste berührt, das Erstellen eines Lösezeitestempels, wenn der Zuschauer die Berührung der CTA-Taste auf der Fernbedienung beendet, und das Erstellen eines Auslösezeitestempels, wenn der Zuschauer die CTA-Taste auf der Fernbedienung betätigt.

Eine Call-to-Action-Taste, nachstehend CTA-Taste genannt, ist eine Taste auf einer Fernbedienung oder einer interaktiven Schaltfläche in einer Benutzeroberfläche, die dazu dient, den Benutzer zu einer bestimmten Aktion zu bewegen oder zu leiten. Diese Tasten sind in der Regel auffällig gestaltet und können kurze, prägnante Texte enthalten, die den Benutzer zur Interaktion auffordern, wie z.B. "Sofort Hilfe anfordern", "Alarm auslösen" oder "Notruf senden" usw. Die CTA-Taste kommt als Gestaltungselement aus dem Design von Webseiten, Apps und anderen Benutzeroberflächen und spielt eine entscheidende Rolle in der Benutzerführung und Conversion-Optimierung. Durch einen Klick auf die CTA-Taste wird in der Regel ein bestimmtes Ziel erreicht, bei dem etwa die nächstgelegenen Rettungskräfte alarmiert werden, automatisch ein vordefinierter Notruf abgesetzt wird oder spezielle Sicherheitsprotokolle in Gang gesetzt werden. Die CTA-Taste soll im Zusammenhang mit der nachstehend beschriebenen Erfindung nicht einschränkend verstanden werden.

Der angegebenen Vorrichtung liegt die Überlegung zugrunde, dass es notwendig ist, bei bestimmten Nachrichten an einen Zuschauer nicht nur festzustellen, ob dieser diese wahrnimmt, sondern auch Anhaltspunkte zu bekommen, wie die Nachricht vom Zuschauer aufgenommen wurde. So sind Nachrichten, mit denen vor einer anstehenden Katastrophe gewarnt wird, von Natur aus hoch emotional und dringlich. Ihre rasche und präzise Vermittlung kann Leben retten und den betroffenen Gemeinschaften helfen, sich vorzubereiten und angemessen zu reagieren. Die angegebene Vorrichtung ermöglicht es Medienorganisationen, ein tieferes Verständnis dafür zu entwickeln, wie die einzelnen auf solche Nachrichten reagieren.

Der Berührungszeitestempel liefert wertvolle Daten über die Schnelligkeit der Zuschauerreaktion auf präsentierte Informationen oder Aufforderungen. Selbst wenn ein Zuschauer sich letztlich gegen die Betätigung der CTA-Taste entscheidet, liefert die alleinige Berührung einen Hinweis auf seine Aufmerksamkeit und sein Interesse an der Nachricht.

Die Verknüpfung des Berührungs- und Lösezeitestempels erlaubt darüber hinaus Rückschlüsse auf die Dauer der Entscheidungsfindung des Zuschauers. Jede Entscheidung setzt zunächst die Wahrnehmung von Informationen voraus - in diesem Fall die multimediale Darbietung, die den Zuschauer zur Bestätigung via CTA-Taste auffordert. Diese Informationen werden im Gehirn verarbeitet und mit bereits vorhandenem Wissen, Erfahrungen und Erinnerungen abgeglichen. Das Gehirn evaluiert die verfügbaren Optionen und trifft eine Auswahl. Dieser Prozess kann sowohl auf bewusster als auch auf unbewusster Ebene stattfinden. Das Ergebnis manifestiert sich im Handeln des Zuschauers: der Betätigung oder Nicht-Betätigung der CTA-Taste.

Dieses Verhalten liefert wertvolle Daten für zukünftige multimediale Präsentationen und ermöglicht es, Inhalte besser auf die Entscheidungsprozesse der Zuschauer auszurichten. Emotionen sind bekanntlich ein starker Einflussfaktor für Entscheidungen, da sie die Attraktivität oder Ablehnung von Optionen beeinflussen können. Durch das Anpassen emotionaler Inhalte in multimedialen Darbietungen und dem anschließenden Messen der Reaktionen darauf lässt sich deren Effektivität besser einschätzen.

Ebenso bieten solche Daten Einblicke in kognitive Verzerrungen des Zuschauers, die deren Informationsverarbeitung und Reaktion beeinflussen. Es lassen sich zudem Rückschlüsse auf soziale und umweltbedingte Einflussfaktoren ziehen, wie Gruppendruck, soziale Normen oder kulturelle Erwartungen. Insbesondere das Ignorieren einer Aufforderung kann wertvolle Erkenntnisse über Gruppendynamiken liefern. Dies ist besonders in der Kommunikation von Notfallnachrichten von unschätzbarem Wert, da es potenziell Leben retten kann.

In einer Weiterbildung der angegebenen Vorrichtung umfasst die Darstellungsanweisung, die CTA-Taste auf dem Bildschirm darzustellen. Auf diese Weise wird eine sichtbare Darstellung der CTA-Taste auf dem Bildschirm ermöglicht, die als visuelle Bestätigung für den Zuschauer dient. Dies ist besonders hilfreich, wenn die Fernbedienung mehrere Tasten hat oder das Design der CTA-Taste nicht sofort erkennbar ist. Durch die direkte visuelle Korrelation zwischen dem, was auf dem Bildschirm angezeigt wird, und dem, was vom Zuschauer erwartet wird, wird die Wahrscheinlichkeit einer korrekten und schnellen Reaktion erhöht. Die Darstellung der CTA-Taste auf dem Bildschirm lenkt zudem die Aufmerksamkeit des Zuschauers direkt auf die gewünschte Aktion und reduziert mögliche Ablenkungen oder Verwirrungen. Es stellt eine intuitive "Handlungsanweisung" dar, die die Entscheidungsfindung des Zuschauers spürbar vereinfacht. Durch die visuelle Wahrnehmung der CTA-Taste im Kontext der Nachricht oder Information kann der Zuschauer den Zusammenhang ferner besser verstehen. Dies ist besonders wichtig, wenn es mehrere mögliche Handlungen oder Reaktionen auf die Nachricht gibt. Die visuelle Darstellung der CTA-Taste kann außerdem dazu genutzt werden, eine emotionale Reaktion oder Verbindung zu erzeugen. Zum Beispiel könnte die Taste in einer Farbe oder Form dargestellt werden, die Dringlichkeit, Wichtigkeit oder andere Emotionen signalisiert. Das Sehen einer physischen Aktion, die auf dem Bildschirm repräsentiert wird, verstärkt darüber hinaus das Gefühl der Interaktivität und Teilnahme für den Zuschauer. Es schafft ein Gefühl der Einbindung und erhöht so die Beteiligung und Reaktion des Zuschauers. Wenn es zusätzliche Informationen oder Anweisungen gibt, die mit der CTA-Taste verbunden sind, können diese direkt neben der visuell dargestellten Taste präsentiert werden, was für Klarheit sorgt und mögliche Missverständnisse reduziert.

In einer weiteren Weiterbildung umfasst die angegebene Vorrichtung eine Kommunikationsschnittstelle, die eingerichtet ist, um an die Fernbedienung eine Änderungsanweisung zu verschicken, mit der Aufforderung an den Zuschauer, die CTA-Taste zu betätigen und das Erscheinungsbild der CTA-Taste zu verändern. Auf diese Weise wird durch Änderungen, besonders visuelle oder haptische, erreicht, dass die Aufmerksamkeit des Benutzers auf die CTA-Taste gezogen wird. Wenn die CTA-Taste leuchtet, vibriert, über das Tastenbild erhoben wird oder in welcher Weise auch immer sich von ihrem Normalzustand heraus beginnt zu verändern, wird der Zuschauer wahrscheinlich schneller darauf reagieren, da diese Änderungen schwer zu übersehen oder zu überfühlen sind. Je nach Geschwindigkeit der Zustandsänderung, beispielsweise mit einem schnellen Blinken oder Vibrieren der CTA-Taste, wird die Dringlichkeit oder Wichtigkeit signalisiert. Dies ist besonders nützlich, wenn eine sofortige Reaktion des Zuschauers erforderlich ist, beispielsweise bei Notfallnachrichten. Eine Möglichkeit, den Zustand der CTA-Taste aus dem Normalzustand zu ändern, ist eine tastbare Änderung, wie das Erheben der Taste, die dem Benutzer eine physisch wahrnehmbare Hilfe beim Erkennen der CTA-Taste bietet. Darüber hinaus können Menschen mit eingeschränkter Sehkraft oder anderen Beeinträchtigungen von haptischen oder akustischen Veränderungen profitieren, da sie nicht ausschließlich auf visuelle Hinweise angewiesen sind. Durch das Ändern des Zustands der CTA-Taste in Abhängigkeit von der Aufforderung, die CTA-Taste zu betätigen, kann eine klar wahrnehmbare Unterscheidung zwischen verschiedenen Arten von Aufforderungen oder Nachrichten getroffen werden. Die Veränderung der CTA-Taste erhöht zudem das Gefühl der Interaktivität und Teilnahme für den Zuschauer. Es schafft eine dynamischere Benutzererfahrung und kann so die Beteiligung und Reaktion des Zuschauers erhöhen. Durch haptische oder visuelle Anreize wird der Entscheidungsprozess des Zuschauers beeinflusst. Ein angenehmes Leuchten oder Vibrieren könnte beispielsweise positive Assoziationen hervorrufen und den Benutzer eher zur Betätigung der Taste bewegen. Schließlich kann je nach Kontext oder Ziel der Nachricht die Art und Weise, wie die CTA-Taste verändert wird, variieren. Dies bietet Flexibilität und ermöglicht es, die Erfahrung für den Benutzer je nach Situation zu optimieren.

In einer zusätzlichen Weiterbildung der angegebenen Vorrichtung umfasst die Änderungsanweisung ein zu aktualisierendes Erscheinungsbild der CTA-Taste. Das Aktualisieren des Erscheinungsbildes der CTA-Taste kann dabei vorzugsweise thematisch mit dem Inhalt der auf dem Bildschirm abgespielten Medienwiedergabe in Einklang gebracht werden. Wenn die CTA-Taste ihr Aussehen ändert, um dem Inhalt der Nachricht zu entsprechen, wie beispielsweise eine Regenwolke bei einer Unwetterwarnung, wird sofort eine klare und direkte Verbindung zwischen dem, was auf dem Bildschirm gezeigt wird, und dem, was vom Zuschauer erwartet wird, hergestellt. Ein intuitives und thematisch passendes Erscheinungsbild verkürzt die Verarbeitungszeit im Gehirn des Zuschauers. Statt eine abstrakte Taste zu interpretieren, wird der Zuschauer durch das aktualisierte Erscheinungsbild der CTA-Taste sofort wissen, welche Aktion erwartet wird. Ein thematisch passendes Symbol kann stärkere emotionale Reaktionen hervorrufen als eine generische Taste. Im Beispiel der Regenwolke kann dies das Gefühl von Dringlichkeit und Bedeutung verstärken, was die Wahrscheinlichkeit einer Reaktion erhöhen kann. Für Personen, die Schwierigkeiten beim Lesen oder Verstehen von Text haben, können visuelle Symbole eine klarere und unmittelbarere Kommunikationsform darstellen. Ein thematisch angepasstes Design erhöht die Benutzerfreundlichkeit und führt zu einer positiveren Benutzererfahrung, da es zeigt, dass der Gestalter der Medienwiedergabe den Inhalt und die Benutzerreise sorgfältig berücksichtigt hat. Ein Bild oder Symbol wird oft universell verstanden und überwindet so Sprachbarrieren. Dies kann besonders wichtig sein, wenn die Medienwiedergabe für ein multikulturelles oder mehrsprachiges Publikum bestimmt ist. Menschen neigen ferner dazu, visuelle Informationen besser zu behalten als textbasierte Informationen. Ein einprägsames Symbol auf der CTA-Taste trägt dazu bei, dass sich der Zuschauer an die Nachricht und die damit verbundene Aufforderung erinnert. Ein aktualisiertes Erscheinungsbild der CTA-Taste, das dem Inhalt auf dem Bildschirm entspricht, schafft eine konsistente und harmonische Benutzererfahrung. Dies trägt dazu bei, Verwirrung oder Frustration zu vermeiden.

In einer anderen Weiterbildung der angegebenen Vorrichtung ist die Kommunikationsschnittstelle ferner eingerichtet, von der Fernbedienung ein Bewegungssignal zu empfangen, welches eine Bewegung der Fernbedienung anzeigt. Die Uhr ist basierend auf dem Bewegungssignal eingerichtet, einen Bewegungszeitstempel zu erstellen, der den Beginn der Bewegung dokumentiert. Die Berücksichtigung des Bewegungssignals, das von der Fernbedienung gesendet wird und den Beginn einer Bewegung dokumentiert, verbessert die Erfassung der Aufmerksamkeit des Zuschauers erheblich. Oftmals reagieren Menschen auf einen Reiz (z. B. eine multimediale Nachricht auf dem Bildschirm) zuerst mit einer physischen Bewegung, noch bevor sie eine bewusste Entscheidung treffen. Das Bewegungssignal, das die Bewegung der Fernbedienung anzeigt, kann also das erste Anzeichen dafür sein, dass der Zuschauer auf die Nachricht reagiert, sogar noch bevor er die CTA-Taste berührt. Wenn der Zuschauer unmittelbar nach der Aufforderung zur Betätigung der CTA-Taste die Fernbedienung bewegt, aber die CTA-Taste weder berührt noch betätigt, könnte dies auf Zögern oder Unsicherheit hinweisen. Diese Information kann als weiteres Kriterium verwendet werden, um zu beurteilen, wie der Zuschauer die Nachricht wahrnimmt und wie effektiv die Nachricht in Bezug auf die gewünschte Reaktion ist. Wenn der Zuschauer die Fernbedienung unmittelbar in Erwartung einer Handlung bewegt, deutet dies darauf hin, dass seine Aufmerksamkeit stark auf den Bildschirm und die Nachricht gerichtet ist. Anders ausgedrückt, wenn der Zuschauer die Fernbedienung erst nach einer vergleichsweise langen Zeitspanne nimmt, um die CTA-Taste zu drücken, könnte dies darauf hinweisen, dass die Aufforderung zur Betätigung der CTA-Taste oder die gesamte abgespielte multimediale Medienwiedergabe missverständlich war und der Zuschauer den Inhalt eher zufällig verstanden hat. Dies kann als ein weiterer Indikator für die Wirksamkeit der abgespielten multimedialen Medienwiedergabe dienen. Je länger die Zeitspanne zwischen dem Bewegungszeitstempel und dem Berühren oder Drücken der CTA-Taste ist, desto komplexer könnte die Entscheidungsfindung für den Zuschauer sein und darauf hinweisen, dass zusätzliche Klarheit oder Information erforderlich sind. Die Kombination von Bewegungs-, Berührungs- und Lösezeitstempeln ermöglicht zudem ein detaillierteres und umfassenderes Bild von der Reaktion und Interaktion des Zuschauers. Dies führt zu einer genaueren Analyse und Interpretation der Daten. Selbst wenn der Zuschauer letztlich beschließt, die CTA-Taste nicht zu betätigen, kann die bloße Bewegung der Fernbedienung als Reaktion auf die Aufforderung zur Betätigung der CTA-Taste als Zeichen des Engagements oder Interesses gewertet werden. Wie bereits weiter oben angedeutet, kann das Erfassen solcher subtilen Signale dazu beitragen, das Verständnis darüber zu vertiefen, was den Zuschauer anspricht und engagiert oder nicht. Durch das Erfassen der Bewegungsdaten lässt sich herausfinden, wie intuitiv die Aufforderung oder die Nachricht für den Zuschauer ist. Je nachdem, wie viele Zuschauer beispielsweise sofort nach der genannten Aufforderung die Fernbedienung bewegen, lässt sich ableiten, wie klar und leicht verständlich die Aufforderung war. Die Berücksichtigung des Bewegungssignals verbessert die Fähigkeit der angegebenen Vorrichtung, die Aufmerksamkeit, das Engagement und die Reaktion des Zuschauers zu messen, erheblich. Dies führt zu einer tieferen und genaueren Einsicht in das Verhalten des Zuschauers und in die Wirksamkeit der Nachricht oder Aufforderung.

In einer besonderen Weiterbildung der angegebenen Vorrichtung ist die Uhr basierend auf dem Bewegungssignal ferner eingerichtet, einen Ruhezeitstempel zu erstellen, der das Ende der Bewegung dokumentiert. Der Ruhezeitstempel, der das Ende der Bewegung dokumentiert, erweitert die Tiefe der Daten und bietet zusätzliche Einblicke in das Verhalten und die Aufmerksamkeit des Zuschauers. Mit dem Bewegungs- und dem Ruhezeitstempel lässt sich die genaue Dauer bestimmen, in der der Zuschauer aktiv engagiert oder aufmerksam war. Dies kann Aufschluss darüber geben, wie stark der Zuschauer auf die auf dem Bildschirm abgespielte multimediale Medienwiedergabe fokussiert war und wie effektiv sie die Aufmerksamkeit des Zuschauers auf sich ziehen konnte. Liegt beispielsweise ein langer Zeitraum zwischen Bewegungsbeginn und Ruhe und hat der Benutzer damit die Fernbedienung lange in der Hand gehalten, ohne die CTA-Taste zu betätigen, könnte dies darauf hinweisen, dass der Zuschauer abgelenkt wurde oder seine Aufmerksamkeit anderweitig gerichtet war. Anders herum kann ein kurzer Zeitraum zwischen Bewegungsbeginn und Ruhe, in den auch die Aktivierung der CTA-Taste fällt, auf ein hohes Maß an Engagement und Entschlossenheit hinweisen. Diese Daten, die aus der Kombination von Bewegungs-, Ruhe-, Berührungs- und Lösezeitstempeln gewonnen werden, können dazu verwendet werden, multimediale Inhalte zu optimieren. Wenn beispielsweise festgestellt wird, dass viele Zuschauer die Fernbedienung nehmen und einen längeren Zeitraum in der Hand halten, ohne die CTA-Taste zu betätigen, könnte dies darauf hinweisen, dass der Inhalt überarbeitet werden muss, um effektiver zu sein. Mit dem Wissen darüber, wie lange Zuschauer die Fernbedienung in der Hand halten und ob sie schließlich die CTA-Taste betätigen, lassen sich Call-To-Action-Anweisungen feinabstimmen, um effektiver zu sein. In Kombination mit anderen Daten lassen sich diese Zeitstempel daher dazu verwenden, ein umfassenderes Bild vom Zuschauerverhalten zu zeichnen. Beispielsweise kann aus einem Ruhezeitstempel, der in den emotionalen Kontext der abgespielten multimedialen Medienwiedergabe gesetzt wird, abgeleitet werden, inwieweit der Zuschauer von der Szene berührt wurde, woraus sich dann wiederum ableiten lässt, ob die Anweisung zum Betätigen der CTA-Taste zum richtigen Zeitpunkt erfolgte. Insgesamt erlaubt die Einführung eines Ruhezeitstempels, der das Ende der Bewegung der Fernbedienung dokumentiert, eine präzisere und tiefere Erfassung der Aufmerksamkeit und Reaktion des Zuschauers. Dies kann wertvolle Einblicke für Content-Ersteller, Werbetreibende und andere Stakeholder bieten, je nachdem, wofür die CTA-Taste verwendet wird.

In einer noch anderen Weiterbildung der angegebenen Vorrichtung ist die Uhr ferner eingerichtet, einen Darstellungszeitstempel zu erstellen, der dokumentiert, wann die Aufforderung an den Zuschauer angezeigt wurde. Durch einen Vergleich des Darstellungszeitstempels mit dem Bewegungszeitstempel lässt sich ermitteln, wie schnell der Zuschauer auf die Aufforderung zur Betätigung der CTA-Taste reagiert hat. Eine schnelle Reaktion würde auf ein hohes Maß an Aufmerksamkeit und Interesse hindeuten. Das heißt, wenn der Zuschauer die Fernbedienung für eine längere Zeit in der Hand hält, bevor er reagiert, deutet dies darauf hin, dass er über die präsentierte Information oder die Aufforderung nachdenkt. Dies kann wertvolle Informationen darüber liefern, welche Inhalte oder Aufforderungen beim Zuschauer möglicherweise Unsicherheit oder Bedenken hervorrufen. Wird zudem festgestellt, dass eine Gruppe Zuschauer tendenziell schneller oder langsamer auf bestimmte Arten von Aufforderungen reagiert (basierend auf dem Zeitraum zwischen Darstellungs- und Bewegungszeitstempel), kann dies dazu genutzt werden, den optimalen Zeitpunkt für zukünftige Aufforderungen zu bestimmen. Die Gesamtdauer, in der der Zuschauer die Fernbedienung in der Hand hält, in Kombination mit dem Zeitpunkt der Aufforderungsdarstellung, kann dazu genutzt werden, die Gesamtwirksamkeit der multimedialen Medienwiedergabe zu bewerten. Dies ist besonders nützlich für Werbetreibende oder Content-Ersteller, die den Erfolg ihrer Botschaften messen möchten. Die Zeitspanne zwischen dem Darstellungszeitstempel und dem Bewegungszeitstempel kann als Informationsgrundlage zur Erfassung eines Ablenkungsgrads des Zuschauers genutzt werden. Hieraus lassen sich dann Verbesserungen bei der Aufforderung zur Betätigung der CTA-Taste einführen, die eine schnellere Reaktion des Zuschauers zum Ziel haben. Das Verständnis darüber, wie lange Zuschauer typischerweise benötigen, um auf eine Aufforderung zu reagieren, und wie lange sie dabei engagiert bleiben (indem sie die Fernbedienung in der Hand halten), bietet ein wertvolles Feedback für Content-Ersteller, um multimedialen Inhalte zu optimieren und effektiver zu gestalten.

In einer weiteren Weiterbildung der angegebenen Vorrichtung ist die Uhr ferner eingerichtet, einen Ausblendungszeitstempel zu erstellen, der dokumentiert, wann die angezeigte Aufforderung an den Zuschauer wieder ausgeblendet worden ist. Die Einführung eines Ausblendungszeitstempels, der den Zeitpunkt erfasst, wann die angezeigte Aufforderung an den Zuschauer wieder ausgeblendet wird, bietet zusätzliche Vorteile und Möglichkeiten für die Analyse und Interpretation der Zuschauerreaktionen. Durch den Vergleich des Darstellungszeitstempels mit dem Ausblendungszeitstempel lässt sich die genaue Dauer ermitteln, wie lange die Aufforderung auf dem Bildschirm angezeigt wurde. Das gibt Einblicke in die durchschnittliche Zeit, die für solche Aufforderungen als effektiv erachtet wird. Die Zeit zwischen der Darstellung und dem Ausblenden der Aufforderung, verglichen mit der Reaktionszeit des Zuschauers (zwischen Darstellungszeitstempel und Bewegungszeitstempel), gibt Aufschluss darüber, wie effizient eine Aufforderung war. Wenn Zuschauer beispielsweise schnell reagieren, bevor die Aufforderung ausgeblendet wird, deutet dies auf eine effektive Aufforderung hin. Mit dem Ausblendungszeitstempel lässt sich feststellen, ob der Zuschauer seine Entscheidung (also das Drücken der CTA-Taste) getroffen hat, während die Aufforderung noch angezeigt wurde oder erst danach. Das kann helfen zu verstehen, ob die Entscheidung spontan aufgrund der Aufforderung getroffen wurde oder ob der Zuschauer mehr Zeit zum Nachdenken benötigte. Es lässt sich auch ableiten, wie gut sich der Zuschauer gegebenenfalls an die Aufforderung erinnern konnte, wie prägnant diese für sein Gedächtnis war. Anders herum könnte, wenn festgestellt wird, dass viele Zuschauer erst nach dem Ausblenden der Aufforderung reagieren, dies darauf hinweisen, dass die Aufforderung länger angezeigt werden sollte. Umgekehrt, wenn die meisten Zuschauer schnell reagieren, könnte die Aufforderungsdauer verkürzt werden, um den Fluss der Medienwiedergabe zu optimieren. Durch das Verständnis, wann Zuschauer typischerweise reagieren (vor oder nach dem Ausblenden der Aufforderung), können Content-Ersteller ihre Aufforderungsstrategien anpassen, um die Interaktion und das Engagement zu maximieren. Zusammengefasst erlaubt der Ausblendungszeitstempel eine genauere Analyse der Effektivität von Aufforderungen und bietet wertvolle Daten, um die Präsentation und das Timing solcher Aufforderungen zu optimieren und so die Aufmerksamkeit und das Engagement des Zuschauers zu maximieren.

Gemäß einem weiteren Aspekt der Erfindung umfasst ein Verfahren zum Erfassen der Aufmerksamkeit eines Zuschauers einer auf einem Bildschirm abgespielten multimedialen Medienwiedergabe die Schritte Darstellen einer Aufforderung an den Zuschauer auf dem Bildschirm, eine Call-To-Action-Taste (CTA-Taste) der Fernbedienung zu betätigen, Erstellen eines Berührungszeitstempels, wenn der Zuschauer auf der Fernbedienung die CTA-Taste berührt, Erstellen eines Lösezeitestempels, wenn der Zuschauer die Berührung der CTA-Taste auf der Fernbedienung beendet, und Erstellen eines Auslösezeitestempels, wenn der Zuschauer die CTA-Taste auf der Fernbedienung betätigt.

In einer Weiterbildung umfasst das angegebene Verfahren den Schritt des Darstellens der CTA-Taste auf dem Bildschirm.

In einer Weiterbildung umfasst das angegebene Verfahren den Schritt Senden einer Änderungsanweisung an die Fernbedienung, um das Erscheinungsbild der CTA-Taste zu verändern, wobei die Aufforderung an den Zuschauer gesendet wird, die CTA-Taste zu betätigen.

In einer Weiterbildung des angegebenen Verfahrens umfasst die Änderungsanweisung das Aktualisieren des Erscheinungsbilds der CTA-Taste.

In einer Weiterbildung umfasst das angegebene Verfahren die Schritte Empfangen eines Bewegungssignals von der Fernbedienung, welches eine Bewegung der Fernbedienung anzeigt, und Erstellen eines Bewegungszeitstempels, der den Beginn der Bewegung dokumentiert, basierend auf dem Bewegungssignal.

In einer Weiterbildung umfasst das angegebene Verfahren den Schritt des Erstellens eines Ruhezeitstempels, der das Ende der Bewegung dokumentiert, basierend auf dem Bewegungssignal.

In einer Weiterbildung umfasst das angegebene Verfahren den Schritt des Erstellens eines Darstellungszeitstempels, der dokumentiert, wann die Aufforderung an den Zuschauer angezeigt worden ist.

In einer Weiterbildung umfasst das angegebene Verfahren den Schritt des Erstellens eines Ausblendungszeitstempels, der dokumentiert, wann die angezeigte Aufforderung an den Zuschauer wieder ausgeblendet worden ist.

Gemäß einem weiteren Aspekt der Erfindung ist eine Steuervorrichtung eingerichtet, um eines der angegebenen Verfahren durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte des angegebenen Verfahrens durchzuführen, wenn das Computerprogramm auf einem elektronischen Gerät oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, das angegebene Verfahren durchführt.
Fig. 1 zeigt eine schematische Darstellung eines Systems bestehend aus einem Fernsehgerät und einer Fernbedienung.
Fig. 2 zeigt eine schematische Darstellung eines Netzwerks mit dem System aus Fig. 1.
Fig. 3 ist ein Sequenzdiagramm eines Verfahrens in dem Netzwerk aus Fig. 2.

In den Abbildungen werden gleiche technische Elemente mit gleichen Bezugszeichen versehen und nur einmal beschrieben. Die Abbildungen sind rein schematisch und geben vor allem nicht die tatsächlichen geometrischen Verhältnisse wieder.

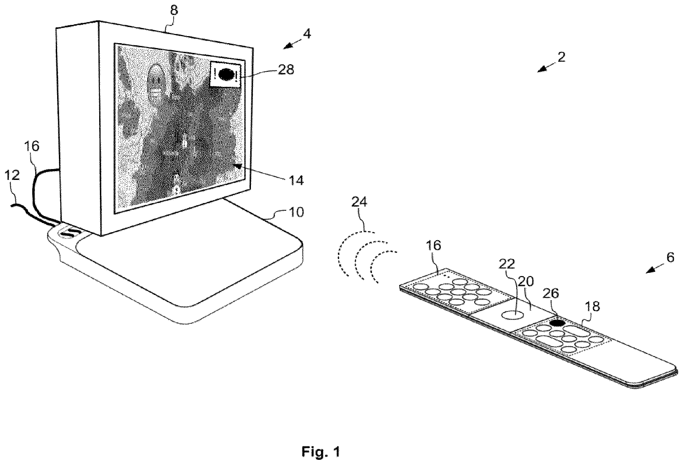

Es wird auf Fig. 1 Bezug genommen, die eine schematische Darstellung eines Systems 2 aus einem Fernsehgerät 4 und einer Fernbedienung 6 zeigt.

Das Fernsehgerät 4 umfasst einen Bildschirm 8, an den eine Set-Top-Box 10 angeschlossen ist. Die Set-Top-Box 10 empfängt über eine Netzwerkverbindung 12, die in Fig. 1 exemplarisch als Netzwerkkabel dargestellt ist, einen Datenstrom, in dem ein Video 14 enthalten ist. Die Set-Top-Box 10 filtert das Video 14 aus dem Datenstrom und gibt über ein Bildschirmkabel 16 ein das Video 14 tragendes Videosignal an den Bildschirm 5 aus, um das Video 14 auf dem Bildschirm 8 wiederzugeben.

Bevor auf das Video 14 näher eingegangen wird, soll zunächst auf die Steuerung des Fernsehgeräts 4 mit der Fernbedienung 6 eingegangen werden.

Die Fernbedienung 6 umfasst ein erstes Tastenfeld 16 und ein zweites Tastenfeld 18, die über ein Steuerkreuz 20 voneinander getrennt sind. Mittig im Steuerkreuz 20 befindet sich eine Bestätigungstaste 22. Dieser Aufbau ist grundsätzlich bekannt und braucht nicht weiter erläutert zu werden. Die Tasten der Tastenfelder 16, 18 sowie das Steuerkreuz 20 und die Bestätigungstaste 22 werden zur Eingabe von Steuerbefehlen eingesetzt, um die Funktion des Fernsehgeräts 4 zu steuern. Hierzu werden die Eingaben in einem Übertragungssignal 24 an die Set-Top-Box 10 gesendet, die die Eingaben aus dem Übertragungssignal 24 filtert und dann zu den Eingaben entsprechende Funktionen auf dem Fernsehgerät 4, wie Lautstärkesteuerung, Programmwahl und dergleichen durchführt.

Eine besondere Taste auf der Fernbedienung, die in Fig. 1 schraffiert und mit dem Bezugszeichen 26 versehen ist, wird für eine besondere Funktion auf dem Fernsehgerät 4 verwendet. Die Idee ist, diese als Call-to-Action-Taste, nachstehend CTA-Taste 26 genannt, auszuführen und den Zuschauer und damit Benutzer der Fernbedienung 6 zu einer bestimmten Aktion zu bewegen oder zu leiten. In der vorliegenden Ausführung steht die bestimmte Aktion beispielhaft im Zusammenhang mit dem Video 14, das als Wetterbericht ausgeführt ist, welcher ein Unwetter in Form einer Kältewelle ankündigt. Die bestimmte Aktion hat zum Ziel, dass Zuschauer aktiv bestätigt, dass er Kenntnis von dem im Wetterbericht berichteten Unwetter genommen hat. Hierzu wird der mit einer entsprechenden Abbildung 28 der CTA-Taste 26, welche dem Video 14 überlagert ist, aufgefordert.

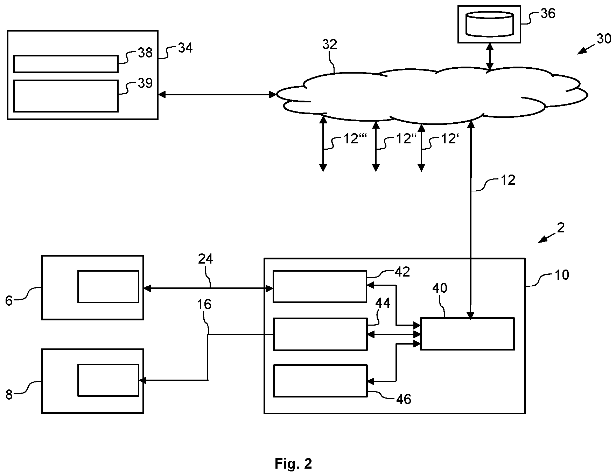

Zur Erläuterung einer Umsetzung dieser Idee wird auf Fig. 2 Bezug genommen, die ein Netzwerk 30 zeigt, in welches das System 2 aus Fig. 1 neben weiteren nicht gezeigten gleichartigen Systemen eingebunden ist. Diese weiteren eingebundenen Systeme sind in Fig. 2 durch weitere Netzwerkverbindungen 12', 12" und 12"' angedeutet.

Das System 2 und die weiteren Systeme sind in dem Netzwerk 30 über bidirektionale Netzwerkverbindungen als Netzwerkverbindungen 12 miteinander verbunden, was beispielsweise durch das Internet 32 realisiert werden kann. Die Netzwerkverbindungen sollten möglichst ausfallsicher sein, was beispielsweise durch Redundanz und/oder durch eine Satellitennetzwerkverbindung erreicht werden kann, wie sie die Firma Starlink bereitstellt. Zusätzlich ist in das Netzwerk 30 ein Programmiersystem 34 und ein Steuersystem 36 eingebunden, die zusammen die oben genannte Idee hinter der CTA-Taste 26 umsetzen. In Abgrenzung dazu wird das oben beschriebene System 2 nachstehend Teilnehmersystem 2 bezeichnet.

Mit dem Programiersystem 34 werden nachstehend sogenannte Kampagnen definiert und verwaltet. Unter einer Kampagne soll nachstehend eine organisierte Aktion oder Reihe von Aktionen verstanden werden, mit der die Zuschauer des Videos 14 oder anderer Videos auf dem Bildschirm 8 dazu motiviert werden, die CTA-Taste 26 zu betätigen, mit dem Ziel, die Kenntnisnahme des Unwetters zu bestätigen. Eine Kampagne im Sinne der Offenbarung kann allerdings auch andere Ziele verfolgen, wie z.B. die Förderung eines Produkts oder Dienstleistung, einer Idee oder einer politischen Agenda. Zur Definition oder zur Steuerung einer Kampagne ist in dem Leitsystem 34 ein CMS 38 genanntes Content Management System implementiert, über welches ein Operator die notwendigen Programmierschritte durchführen kann. Die Programmierung ist an sich bekanntes Handwerk und hängt von der gewählten Programmiersprache ab. Daher soll hierauf nicht weiter eingegangen werden.

Am effizientesten lässt sich das System mit einem Abonnentensystem umsetzen, bei dem sich interessierte Teilnehmer registrieren. Dies hat vor allem den Vorteil, dass dadurch auch datenschutzrechtliche Probleme vermieden werden können, die entstehen, wenn Daten der Teilnehmer in für die Umsetzung der zuvor genannten Idee in notwendigere Weise erfasst werden. Ein weiterer Vorteil des Abonenntensystems ist, dass Teilnehmer ganz gezielt angesprochen werden können, wenn sie die Unwettermeldung in dem Video 14 betrifft. Hierzu steht in dem Leitsystem 34 ein Abonnentenverwaltungssystem 39 zur Verfügung, mit welchem sich die Teilnehmer eintragen, verwalten und gegebenenfalls löschen lassen. Zur eindeutigen Bestimmung eines Teilnehmers kann in dem Abonnentenverwaltungssystem 39 beispielsweise eine Identifikation der Set-Top-Box 10, eine Identifikation der Fernbedienung 4 und eine Identifikation des das System 2 besitzenden Haushalts hinterlegt werden.

Die Steuerung einer Kampagne wiederum übernimmt das Steuersystem 36. Hier werden die durch das Programmiersystem 34 programmierten Kampagnen verwaltet und beim Starten einer Kampagne mit vorab bestimmten Parametern ausgestattet, soweit es notwendig ist. Im Falle der oben genannten Unwetterwarnung kann dies beispielsweise eine Vervollständigung von vorab als Textbaustein hinterlegten Informationstexten mit Daten wie zu erwartende Temperatur, Zeit und ähnlichem sein. Ferner wird beim Starten einer Kampagne beispielsweise anhand der Identifikation der Set-Top-Box 10 der Teilnehmerkreis festgelegt, der mit der Kampagne angesprochen werden soll. Ein solcher Teilnehmerkreis soll nachstehend als Kohorte bezeichnet werden. Das Steuersystem 36 ist ferner dafür zuständig, die Kampagnendaten, wie eine Identifikation der Kampagne, Mediendaten, Texte, und so weiter an die einzelnen Set-Top-Boxen 10 zu versenden. Zur Auswertung einer Kampagne kann das Steuersystem 36 ferner von den einzelnen Teilnehmern der Kohorte Auswertedaten empfangen, die vor allem eine Rückmeldung umfasst, auf welcher Fernbedienung 6 die CTA-Taste 26 bedient wurde. Abschließend können mit dem Steuersystem 36 auch Evaluierungen, wie beispielsweise an sich bekanntem A/B-Testing durchgeführt werden.

Das Steuersystem 36 spricht über die Netzwerkverbindung 12 in der Set-Top-Box 10 des jeweiligen Teilnehmersystems 2 einen Kampagnenverwaltungsservice 40, der die jeweilige gestartete Kampagne auf der Seite des Teilnehmers im Teilnehmersystem 2 steuert. Der Kampagnenverwaltungsservice 40 kann grundsätzlich als physisch eigene Recheneinheit ausgebildet sein, um beispielsweise ältere Set-Top-Boxen mit der Funktionalität gemäß der beschriebenen Idee zu ergänzen. Alternativ kann der Kampagnenverwaltungsservice 40 auch in der Set-Top-Box 10 Programm hinterlegt sein, was aus Kostengründen vorzuziehen wäre. Zur Steuerung einer Kampagne auf Teilnehmerseite speichert der Kampagnenverwaltungsservice 40 die oben genannten Kampagnendaten und hält für die Auswertung der Kampagne wichtige Informationen über den Haushalt bereit, der mit der Kampagne angesprochen wurde. Derartige Informationen können im Falle der obigen Unwetterwarnung das Alter der Haushaltsangehörigen oder dergleichen sein, um aus der Reaktion des Teilnehmers beziehungsweise Zuschauers abschätzen zu können, wie dringend eventuelle Notfallmaßnahmen im Falle einer Nichtbetätigung der CTA-Taste 26 sind.

Der Kampagnenverwaltungsservice 40 spricht ferner die anderen Komponenten der Set-Top-Box 10 an, um die Kampagne zu steuern. Dies wäre im vorliegenden Falle ein Aufmerksamkeitssensor 42 mit einer als BLE-Schnittstelle genannte Bluetooth-Low-Energy-Schnittstelle ausgeführten Kommunikationsschnittstelle zur Fernbedienung 6, einer als HDMI-Schnittstelle 44 genannte High-Definition Multimedia Interface-Schnittstelle ausgeführten Kommunikationsschnittstelle zum Bildschirm 8 und das eigentliche Betriebssystem der Set-Top-Box 10, welches in der Regel aber nicht einschränkend als Android-Betriebssystem 46 ausgeführt ist. Auf den Aufmerksamkeitssensor 42 wird an späterer Stelle im Detail näher eingegangen.

Über die BLE-Schnittstelle des Aufmerksamkeitssensors 42 versendet der Kampagnenverwaltungsservice 40 in dem Übertragungssignal 24 die Aufforderung an den Zuschauer beziehungsweise Teilnehmer die CTA-Taste 26 zu drücken. Hierzu kann die CTA-Taste 26 vorzugsweise veränderlich ausgeführt sein, wobei der Kampagnenverwaltungsservice 40 zusätzlich zur oder statt der Aufforderung ein Bild versenden kann, wie die CTA-Taste 26 in besonderer Weise für die Kampagne ausgestaltet werden soll. Auf den Versand hin wartet der Kampagnenverwaltungsservice 40 auf eine Antwort von der Fernbedienung 6, ob die CTA-Taste 26 auf der Fernbedienung 6 gedrückt wurde. Im Falle einer Antwort kann der Kampagnenverwaltungsservice 40 einen Zeitstempel erfassen, der die Betätigung der CTA-Taste dokumentiert, was nachstehend als RCU Ergeignis (Remote Control Unit Ereignis) bezeichnet werden soll. Alternativ oder zusätzlich kann der Kampagnenverwaltungsservice 40 auch einen Zeitstempel erfassen, der dokumentiert, an welcher Stelle sich das Video befindet. In Abgrenzung zum RCU-Ereignis soll dieses Ereignis als DMB Ereignis (Digital Multimedia Broadcasting Ereignis) bezeichnet werden. Zwar kann die BLE-Schnittstelle des Aufmerksamkeitssensors 42 grundsätzlich ein beliebiges Übertragungsprotokoll verwenden, allerdings muss die entsprechende Schnittstelle zur bidirektionalen Kommunikation ausgebildet sein.

Eine bidirektionale Kommunikation ist für die HDMI-Schnittstelle 44 demgegenüber nicht zwingend notwendig. Hier verschickt der Kampagnenverwaltungsservice 40 nur Daten an den Bildschirm 8, ohne auf eine Rückmeldung zu warten. Die an den Bildschirm versendeten Daten umfassen zum Start einer Kampagne die Aufforderung, die CTA-Taste 26 zu betätigen, die in Fig. 1 in Form der Abbildung 28 des CTA-Buttons 26 auf dem Bildschirm 8 ausgeführt und dem Video 14 überlagert ist. Daneben kann der Kampagnenverwaltungsservice 40 über die HDMI-Schnittstelle 44 auch Hintergrundinformationen zu einer Kampagne und weitere Daten an den Bildschirm 8 zur Darstellung übertragen, falls dies notwendig ist. Schließlich blendet der Kampagnenverwaltungsservice 40 all diese Daten zu einem geeigneten Zeitpunkt, beispielsweise nach der Betätigung des CTA-Buttons 26 oder nach Beendigung einer Kampagne wieder aus.

Abschließend kann der Kampagnenverwaltungsservice 40 auch in das Android-Betriebssystem 46 eingreifen, beispielsweise um automatisch Videos abzuspielen, Programme zu starten und/oder zu installieren oder um Kommunikationskanäle aufzubauen, beispielsweise um eine Telefonverbindung herzustellen. Dies ist je nach Anwendungszweck zu wählen. Im Falle der oben genannten Unwetterwarnung kann beispielsweise eine Videokommunikationsverbindung aufgebaut werden, wenn der Teilnehmer ein bestimmtes Grenzalter überschreitet und zu erwarten ist, dass er Hilfe benötigt, um diese Hilfe dann telefonisch abzustimmen.

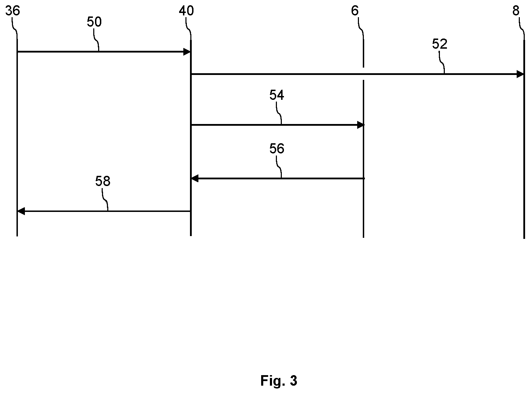

Zur Verdeutlichung des Nachrichtenflusses beim Ablauf einer Kampagne soll auf das Sequenzdiagramm in Fig. 3 Bezug genommen werden.

Zunächst versendet das Steuersystem 36 eine Push-Nachricht 50 an den Kampagnenverwaltungsservice 40 in der Set-Top-Box 10, in der alle notwendigen Informationen enthalten sind, um eine Kampagne dem Zuschauer beziehungsweise Teilnehmer darzustellen und ihn aufzufordern, die CTA-Taste 26 zu betätigen. Auf diese Push-Nachricht 50 hin generiert der Kampagnenverwaltungsservice 40 einen Push-Befehl 52 und eine Gestaltungsanweisung 54. Der Push-Befehl 52 enthält neben optionalen Hintergrundinformationen zur Kampagne, also beispielsweise der Unwetterwarnung, als Aufforderung die CTA-Taste 26 zu bedienen die Abbildung 28 der CTA-Taste 26, die mit dem Video 14 überlagert werden soll und wird an den Bildschirm 8 versendet. Parallel dazu enthält die Gestaltungsanweisung 54 in paralleler Weise ebenfalls die Abbildung 28 der CTA-Taste 26 mit der Anweisung an die Fernbedienung, die in entsprechender Weise zu gestalten. Alternativ dazu kann die Gestaltungsanweisung allerdings auch von der Abbildung abweichen und beispielsweise die CTA-Taste 26 nur beleuchten oder dergleichen.

Anschließend wartet der Kampagnenverwaltungsservice 40 auf eine Rückmeldung 56 der Fernbedienung 6, ob die CTA-Taste 26 tatsächlich bedient wurde und versendet auf Empfang der Rückmeldung 56 hin eine Rückmeldungsnachricht 58 an das Steuersystem, um die Betätigung der CTA-Taste zu bestätigen.

Abschließend wird der Aufmerksamkeitssensor 42 als Vorrichtung zum Erfassen der Aufmerksamkeit des Zuschauers der auf dem Bildschirm 4 abgespielten multimedialen Medienwiedergabe 14 mit der Fernbedienung 6 näher erläutert.

Der Aufmerksamkeitssensor 42 umfasst eine Uhr 60. Die Uhr 60 erstellt verschiedene Zeitstempel, mit denen verschiedene Ereignisse dokumentiert werden. Die wichtigsten Zeitstempel sind ein Berührungszeitstempel mit dem dokumentiert wird, wenn der Zuschauer auf der Fernbedienung die CTA-Taste 26 berührt sowie ein Lösezeitstempels mit dem dokumentiert wird, wenn der Zuschauer die Berührung der CTA-Taste auf der Fernbedienung beendet. Ferner erstellt die Uhr noch einen Auslösezeitstempel, wenn der Zuschauer die CTA-Taste 26 auf der Fernbedienung auf der Fernbedienung betätigt.

Über die BLE-Schnittstelle empfängt der Aufmerksamkeitssensor 42 von der Fernbedienung 4 ein Bewegungssignal zu empfangen, welches eine Bewegung der Fernbedienung 4 anzeigt. Basierend auf diesem Bewegungssignal erstellt die Uhr 60 einen Bewegungszeitstempel, der einen Beginn der Bewegung dokumentiert. Basierend auf dem Bewegungssignal ist die Uhr 60 ferner eingerichtet, einen Ruhezeitstempel zu erstellen, der ein Ende der Bewegung dokumentiert.

Die Uhr 60 ist ferner eingerichtet, einen Darstellungszeitstempel, der dokumentiert, wann die Aufforderung an den Zuschauer angezeigt worden ist und einen Ausblendungszeitstempel zu erstellen, der dokumentiert, wann die angezeigte Aufforderung an den Zuschauer wieder ausgeblendet worden ist.

## Patentansprüche

1. Vorrichtung (40) zum Erfassen der Aufmerksamkeit eines Zuschauers einer auf einem Bildschirm (8) abgespielten multimedialen Medienwiedergabe mit einer Fernbedienung (6), wenn auf dem Bildschirm (8) eine Aufforderung an den Zuschauer, eine CTA-Taste (26) genannte Call-To-Action-Taste der Fernbedienung (6) zu betätigen, dargestellt wird, umfassend eine Uhr (60) zum Erstellen eines Berührungszeitstempels, wenn der Zuschauer auf der Fernbedienung (6) die CTA-Taste (26) berührt, zum Erstellen eines Lösezeitstempels, wenn der Zuschauer die Berührung der CTA-Taste (26) auf der Fernbedienung (6) beendet, und zum Erstellen eines Auslösezeitstempels, wenn der Zuschauer die CTA-Taste (26) auf der Fernbedienung (6) betätigt.

2. Vorrichtung (40) nach Anspruch 1, wobei die Aufforderung an den Zuschauer eine Darstellungsanweisung umfasst, die CTA-Taste (26) auf dem Bildschirm (8) darzustellen.

3. Vorrichtung (40) nach Anspruch 1 oder 2, umfassend eine Kommunikationsschnittstelle (42), die eingerichtet ist, an die Fernbedienung (6) eine Änderungsanweisung zu verschicken, mit der Aufforderung an den Zuschauer, die CTA-Taste (26) zu betätigen, ein Erscheinungsbild der CTA-Taste (26) zu verändern, wobei die Änderungsanweisung vorzugsweise ein zu aktualisierendes Erscheinungsbild der CTA-Taste (26) umfasst.

4. Vorrichtung (40) nach Anspruch 3, wobei die Kommunikationsschnittstelle ferner eingerichtet ist, von der Fernbedienung (6) ein Bewegungssignal zu empfangen, welches eine Bewegung der Fernbedienung (6) anzeigt und wobei die Uhr (60) basierend auf dem Bewegungssignal eingerichtet ist, einen Bewegungszeitstempel zu erstellen, der einen Beginn der Bewegung dokumentiert.

5. Vorrichtung (40) nach Anspruch 4, wobei die Uhr (60) basierend auf dem Bewegungssignal ferner eingerichtet ist, einen Ruhezeitstempel zu erstellen, der ein Ende der Bewegung dokumentiert.

6. Vorrichtung (40) nach einem der vorstehenden Ansprüche, wobei die Uhr (60) ferner eingerichtet ist, einen Darstellungszeitstempel zu erstellen, der dokumentiert, wann die Aufforderung an den Zuschauer angezeigt worden ist.

7. Vorrichtung (40) nach Anspruch 6, wobei die Uhr (60) ferner eingerichtet ist, einen Ausblendungszeitstempel zu erstellen, der dokumentiert, wann die angezeigte Aufforderung an den Zuschauer wieder ausgeblendet worden ist.

8. Fernbedienung (6) zur Interaktion mit einer Vorrichtung (40) nach einem der vorstehenden Ansprüche, umfassend: eine CTA-Taste (26) mit einem Berührungssensor zur Erfassung einer Berührung der CTA-Taste (26) durch den Zuschauer und einem Druckaufnahmesensor zur Erfassung einer Auslösung der CTA-Taste (26) durch den Zuschauer, und eine Kommunikationsschnittstelle zum Senden der Sensorsignale aus dem Berührungssensor und dem Druckaufnahmesensor an eine Kommunikationsschnittstelle der Fernbedienung (6).

9. System (2) umfassend: eine Vorrichtung (40) nach einem der Ansprüche 1 bis 7, und eine Fernbedienung (6) nach Anspruch 8.

10. Verfahren zum Erfassen der Aufmerksamkeit eines Zuschauers einer auf einem Bildschirm (8) abgespielten multimedialen Medienwiedergabe, umfassend die Schritte: Darstellen einer Aufforderung an den Zuschauer auf dem Bildschirm (8), eine nachstehendn CTA-Taste genannte Call-To-Action-Taste (26) der Fernbedienung (6) zu betätigen, Erstellen eines Berührungszeitstempels, wenn der Zuschauer auf der Fernbedienung (6) die CTA-Taste (26) berührt, Erstellen eines Lösezeitestempels, wenn der Zuschauer die Berührung der CTA-Taste (26) auf der Fernbedienung (6) beendet, und Erstellen eines Auslösezeitestempels, wenn der Zuschauer die CTA-Taste (26) auf der Fernbedienung (6) betätigt.

11. Verfahren nach Anspruch 11, umfassend Darstellen der CTA-Taste (26) auf dem Bildschirm (8).

12. Verfahren nach Anspruch 10 oder 11, umfassend den Schritt Senden einer Änderungsanweisung an die Fernbedienung (6), um das Erscheinungsbild der CTA-Taste (26) zu verändern, wobei die Aufforderung an den Zuschauer gesendet wird, die CTA-Taste (26) zu betätigen, wobei die Änderungsanweisung vorzugsweise ein Aktualisieren des Erscheinungsbilds der CTA-Taste (26) umfasst.

13. Verfahren nach Anspruch 12, umfassend die Schritte: Empfangen eines Bewegungssignals von der Fernbedienung (6), welches eine Bewegung der Fernbedienung (6) anzeigt, und Erstellen eines Bewegungszeitstempels, der den Beginn der Bewegung dokumentiert, basierend auf dem Bewegungssignal.

14. Verfahren nach Anspruch 13, umfassend Erstellen eines Ruhezeitstempels, der das Ende der Bewegung dokumentiert, basierend auf dem Bewegungssignal.

15. Verfahren nach einem der vorstehenden Ansprüche 11 bis 14, umfassend:
- Erstellen eines Darstellungszeitstempels, der dokumentiert, wann die Aufforderung an den Zuschauer angezeigt worden ist, und/oder Erstellen eines Ausblendungszeitstempels, der dokumentiert, wann die angezeigte Aufforderung an den Zuschauer wieder ausgeblendet worden ist.
